## Europäisches Patentamt

## European Patent Office

## Office européen des brevets

(11) Publication number: **0 114 092**
**B1**

(12) **EUROPEAN PATENT SPECIFICATION**

(45) Date of publication of the patent specification:
**17.09.86**

(51) Int. Cl.⁴: **C 03 C 25/02**

(21) Application number: **84300062.1**

(22) Date of filing: **05.01.84**

(54) Glass fiber for optical transmission.

(30) Priority: **06.01.83 JP 197/83**
**06.01.83 JP 198/83**

(43) Date of publication of application:
**25.07.84 Bulletin 84/30**

(45) Publication of the grant of the patent:
**17.09.86 Bulletin 86/38**

(84) Designated Contracting States:
**DE FR GB**

(56) References cited:
**FR - A - 2 441 185**
**GB - A - 1 524 316**

**The file contains technical information submitted after
the application was filed and not included in this
specification**

(73) Proprietor: **SUMITOMO ELECTRIC INDUSTRIES
LIMITED, No. 15, Kitahama 5-chome Higashi-ku,
Osaka-shi Osaka 541 (JP)**
Proprietor: **Nippon Telegraph and Telephone
Corporation, 1-6 Uchisaiwaicho 1-chome Chiyoda-ku,
Tokyo (JP)**

(72) Inventor: **Kameo, Yuji c/o Yokohama Works of,
Sumitomo Electric Ind. Ltd. 1, Taya-cho, Totsuka-ku
Yokohama-shi Kanagawa (JP)**
Inventor: **Yamanishi, Toru c/o Yokohama Works of,
Sumitomo Electric Ind. Ltd. 1, Taya-cho, Totsuka-ku
Yokohama-shi Kanagawa (JP)**
Inventor: **Yuto, Masao c/o Yokohama Works of,
Sumitomo Electric Ind. Ltd. 1, Taya-cho, Totsuka-ku
Yokohama-shi Kanagawa (JP)**
Inventor: **Yoshida, Masaaki c/o Yokohama Works of,
Sumitomo Electric Ind. Ltd. 1, Taya-cho, Totsuka-ku
Yokohama-shi Kanagawa (JP)**
Inventor: **Tsuneishi, Katsuyuki c/o Yokohama Works of,
Sumitomo Electric Ind. Ltd. 1, Taya-cho, Totsuka-ku
Yokohama-shi Kanagawa (JP)**
Inventor: **Tanaka, Chihaya, 510, Tsukui, Yokosuka-shi
Kanagawa (JP)**

(74) Representative: **Pearce, Anthony Richmond et al, Marks
& Clerk Alpha Tower Suffolk Street, Queensway
Birmingham B1 1TT (GB)**

# Description

## Field of the invention

This invention relates to a glass fiber for optical transmission (hereinafter referred to as optical fiber) and, more particularly, to an optical fiber having been extrusion coated with a fluorine-containing resin which does not cause deterioration of properties of an optical fiber.

## Background of the invention

A typical conventional coating structure of optical fiber is a so-called two-layered coating structure composed of a relatively thin baked layer and an extrusion coating layer as proposed in U.S. Patent 3 980 390 [corresponding to Japanese Patent Publication (Unexamined) No. 125 754/1975]. The coating materials conventionally used for the baked layer and the extrusion coating layer include silicone resins, epoxy resins, urethane resins, polyamide resins (nylon), polyethylene, and the like. Of these coating materials, thermoplastic resins used for the extrusion coating layer have low melting points and undergo remarkable deterioration due to oxidation at high temperatures, and only fluorine-containing resins that withstand the use at high temperatures of 150°C or more for long periods of time have been employed as an extrusion coating layer for, in particular, so-called heat resistant coated optical fibers.

GB-A-1 524 316 discloses a vitreous optical fibre coated with three coats of polymeric material. The fibre comprises a doped silica core with a pure silica cladding, a first coat of polyurethane containing 10-15 wt percent of carbon powder, a second coat of silicone resin and a third coat of polyvinylidene fluoride copolymer. The object of these coatings is to reduce the liability to exhibit microbending loss in operation and to improve the rate of drawing. The carbon powder is used in the first coat to increase the load carrying capacity of the waveguide.

FR-A-2 441 185 discloses an optical fibre comprising a glass core with a first phenyl-containing silicone resin and a second coating of silicone resin containing a filler, typically fumed silica. The structure is designed to prevent increase in transmission loss due to shrinkage and microbending.

According to studies of the present inventors, howerer, it was found that optical fibres in which a fluorine-containing resin is used as an extrusion coating layer having mechanical strengh much lower than those coated with polyamides (nylon), polyethylene, etc. as an extrusion coating layer, and hence the optical fibers coated with the fluorine-containing resin cannot be put into practical use. For example, the present inventors have found that optical fibre consisting of a glass fiber having an outer diameter of 125 μm, a baked silicone layer provided thereon in a thickness of about 150 μm and an extrusion coating layer of nylon-12 in a thickness of 250 μm has an average tensile strength of 6.2 Kg, whereas the optical fiber having the same structure as above but having an extrusion coating layer of ETFE (ethylenetetrafluoroethylene copolymer) in a thickness of 250 μm in place of the nylon-12 layer has an average tensile strength of 3.6 Kg.

The present inventors intensively investigated the above-described decrease in the mechanical strength of optical fibers which is coated with fluorine-containing resins, and as a result, have found that such decrease in the mechanical strength is ascribed to fluorine gas or hydrofluoric acid generated at the time of melt-extrusion of a fluorine-containing resin and completed the present invention.

More specifically, it is believed that fluorine gas or hydrofluoric acid generated during the extrusion coating passes through a first baked layer and reaches surfaces of glass fibers to erode the glass surfaces or destroy chemical bonding between the glass surfaces and the baked layer thereby causing the above-described reduction in mechanical strength. Further, it has been found that the reduction of mechanical strength of the optical fiber having an extrusion coating layer of a fluorine-containing resin is also observed when the optical fiber is irradiated with electron beams. This phenomenon is also considered to be caused by fluorine gas or hydrofluoric acid generated by the electron beam radiation.

According to the studies of the present inventors, in order to prevent or minimize generation of fluorine gas or hydrofluoric acid during melt-extrusion of fluorine-containing resins, it is necessary to lower the extrusion temperature of the fluorine-containing resin to about a melting point of the fluorine-containing resin. At such a low extrusion temperature, the viscosity of the resin during extrusion increases thereby leaving a high residual strain in the coating after extrusion molding. The residual strain then causes shrinkage of coating materials with the passage of time, which results in increase of transmission loss due to so-called microbending.

As a result of further investigation, it has been found that when an adsorbent solid powder such as titanium oxide, calcium carbonate and the like is present in the fluorine-containing resin, fluorine gas or hydrofluoric acid that is generated during melt-extrusion of the resin is adsorbed to the solid powder and is prevented from reaching the glass fiber surface thereby causing no reduction in the mechanical strength of the optical fibers.

The present invention has been completed based on the above-described findings and provides a glass fiber for optical transmission (hereinafter, optical fiber) having an improved mechanical strength and comprising a glass fiber having provided thereon a first coating layer of a hardened resin and a second fluorine-containing resin layer formed by extrusion molding, at least one of the first and second layers containing an adsorbable solid powder in an amount of 0.05 to 20% by weight based on the weight of the first or second layer.

## Summary of the invention

A primary object of the present invention is to provide an optical fiber having an improved mechanical strength.

Another object of the present invention is to provide an optical fiber having an extrusion coating layer which does not adversely affect the transmission properties of the optical fiber.

A further object of the present invention is to provide an improved optical fiber having an extrusion coating layer of a fluorine-containing resin.

According to the present invention there is provided a glass fiber for optical transmission comprising a glass fiber having provided thereon a first coating layer of a hardened resin and a second, fluorine-containing resin layer formed by extrusion moulding, wherein solid powder which is capable of adsorbing fluorine gas or hydrofluoric acid is present in both the first and second layers.

*Detailed description of the invention*

The term «adsorbable solid powder» as used herein means a solid powdery material which is capable of adsorbing fluorine gas and/or hydrofluoric acid generated from a fluorine-containing resin.

The adsorbable solid powder which can be used in the present invention includes those having a melting point or decomposition point of 350°C or more, such as metal oxides such as zinc oxide, aluminium oxide, titanium oxide ($TiO$, $TiO_2$, $Ti_2O_3$), magnesium oxide, calcium oxide, silicon oxide, iron oxide, boron oxide ($B_2O_3$), barium sulfate, zirconium oxide ($ZrO_2$), etc.; carbonates such as calcium carbonates, etc.; carbon powder, activated carbon powder; and the like. Preferred examples of adsorbable solid powders are boron oxide ($B_2O_3$), zirconium oxide ($ZrO_2$), barium sulfate ($BaSO_4$), titanium dioxide ($TiO_2$), calcium carbonate ($CaCO_3$) and silicon dioxide ($SiO_2$), and particularly preferred powders are $CaCO_3$, $B_2O_3$, $BaSO_4$ and $ZrO_2$. These solid powders may be used alone or in combination thereof. Many of these solid powders have been used as inorganic pigments so that they can also serve as pigments in the present invention if desired.

The amount of the adsorbable solid powder to be incorporated into the coating layer should be at least 0.05 percent by weight based on the weight of the coating layer to which the powder is added from the standpoint of an adsorption effect and not more than 20 percent by weight based on the weight of the coating layer from the standpoint of not causing any adverse effects on properties of the coating layer. A preferred amount of the adsorbable solid powder is 0.05 to 10 percent, and the most preferred amount is 0.1 to 5 percent, based on the weight of the coating layer to which the powder is added.

These adsorbable solid powders are added to the first coating layer and the second coating layer and the amount of the powder in each layer should not exceed 20 percent by weight based on the weight of the respective coating layer.

The particle size of adsorbable solid powders is not an important factor in the present invention, but preferably from about 5 to about 40 µm.

The materials to be used as a first coating layer provided under the fluorine-containing resin-coated layer according to the present invention are not particularly limited and any materials of thermosetting or ultraviolet-hardenable materials having a viscosity of 1 to 10 Pa.s (1000 to 10000 cps) at room temperature can be used.

Preferred examples of these materials include silicone resins, epoxy resins, urethane resins, polyesters, polybutadiene and modified resins thereof.

Particularly preferred examples of the first layer include a silicone resin, an epoxy acrylate resin, a urethane acrylate resin, a butadiene acrylate resin and the like.

The first layer preferably has a thickness of about 30 to 150 µm.

The materials to be used as a second layer are fluorine-containing resins such as tetrafluoroethylene polymers, tetrafluoroethylene-hexafluoropropylene copolymers, ethylene-tetrafluoroethylene copolymers (ETFE), perfluoroalkoxyethylene-tetrafluoroethylene copolymers (PFA), chlorotrifluoroethylene polymers, vinylidene fluoride polymers, etc. Preferred materials are ethylene-tetrafluoroethylene copolymers and perfluoroalkoxyethylene-tetrafluoroethylene copolymer. ETFE has a specific gravity of 1.73 to 1.75 (ASTM D792), a melting point of 255 to 270°C, a melt viscosity of $10^4$ to $10^5$ poise (at 300 to 330°C), a tensile strength of 410 to 470 $Kg/cm^2$ at 23°C and no break in the Izod impact test (ASTM D256), and PFA has a specific gravity of 2.13 to 2.16 (ASTM D792), a melting point of 302 to 310°C, a tensile strength of 315 $Kg/cm^2$ at 23°C and no break in the Izod impact test (ASTM D256).

The glass fibers used in the present invention can be those produced from a quartz glass as main component (with a small amount of dopants) by drawing which is well known in the art, for example, as disclosed in «*Optical Communication Handbook*» Section 5.3 (Asakura Publishing Co., Japan). These fibers generally have an outer diameter of from about 100 µm to about 150 µm, preferably 120 µm to 140 µm, more preferably 125 µm or 140 µm which is now recognized as standard.

The second layer preferably has a thickness of 0.1 to 0.25 mm.

In producing the optical fiber according to the present invention, the adsorbable solid powder is incorporated into the resin for the first layer and the fluorine-containing resin for the second layer, and the resulting resin compositions are kneaded so as to disperse the powder uniformly. The first layer can be formed by dipping or passing the glass fiber into a resin for the first layer, before contacting the drawn glass fiber with any solid material, and the coated fiber is hardened, as disclosed in «*Optical Communication Handbook*», Section 5.3C (Asakura Publishing Co., Japan). The second layer can be formed by extrusion molding a molten fluorine-containing resin over the first layer through a die, which is well known in the art. For example, the glass fiber having a hardened first layer is fed from a supply stand while controlling its tension by dancer rolls and supplied to a drawdown type die where the fiber is coated by extrusion molding without loading a pressure of the resin on the fiber. The outer diameter of the coated fiber is controlled by monitoring the outer diameter immediately after coating by a non-contact type «D» monitor and feeding back a signal of the determined diameter to the extruder so as to control a screw rotation of the extruder. After coating, the resulting optical fiber is passed through a cooling bath and capstans, and wound-up on a bobbin by a winder where winding tension is controlled by dancer rolls.

The resulting optical fiber generally has an outer diameter of 0.5 to 1.0 mm.

The present invention will now be illustrated in greater detail with reference to examples, but it should be understood that the present invention is not limited to these examples.

*Comparative example*

An optical fiber comprising mainly quartz glass and having an outer diameter of 125 μm was drawn and, before contacting with any solid materials, a silicon resin of two-liquid room temperature-hardening type containing no silicon dioxide was coated on the drawn fiber in a thickness of 150 μm, followed by being hardened. The resulting silicone-coated fiber was then coated with an ethylene-tetrafluoroethylene copolymer by extrusion molding so as to have an outer diameter of 0.9 mm.

The mechanical strength of the fluorine-containing resin-coated optical fiber obtained was determined by tensile testing (sample length 20 m; $\eta = 20$) and was found to be 3.4 Kg.

*Example*

An optical fiber comprising mainly quartz glass and having an outer diameter of 125 μm was drawn and, before contacting with any solid materials, a silicone resin of two-liquid room temperature-hardening type containing 5 wt percent of silicon dioxide powder (average particle size: 5 to 40 μm) was coated on the drawn fiber in a thickness of 150 μm, followed by hardening. The resulting silicone-coated fiber was then coated with an ethylene-tetrafluoroethylene copolymer containing 1.0 percent by weight of titanium dioxide (titanium white) (average particle size: 5 to 40 μm) by extrusion molding so as to have an outer diameter of 0.9 mm.

The mechanical strength of the fluorine-containing resin-coated optical fiber obtained was determined by tensile testing (sample length: 20 m; $\eta = 20$) and was found to be 6.6 Kg. This result clearly demonstrates that the adsorbable solid powder used in the present invention is very effective for adsorbing fluorine gas or hydrofluoric acid.

**Claims**

1. A glass fiber for optical transmission comprising a glass fiber having provided thereon a first coating layer of a hardened resin and a second, fluorine-containing resin layer formed by extrusion moulding, wherein solid powder which is capable of adsorbing fluorine gas or hydrofluoric acid is present in both the first and second layers.

2. A glass fiber for optical transmission as claimed in Claim 1, wherein said solid powder is present in an amount of from 0.05 to 20 percent by weight based on the weight of the first or second layer respectively.

3. A glass fiber for optical transmission as claimed in Claim 1 or 2, wherein the solid powder has a melting point or decomposition point of 350°C or more.

4. A glass fiber for optical transmission as claimed in any preceding claim, wherein the solid powder is selected from zinc oxide, aluminium oxide, titanium oxide, magnesium oxide, calcium oxide, silicon oxide, iron oxide, boron oxide, barium sulfate, zirconium oxide, calcium carbonate, carbon powder, activated carbon powder and a mixture thereof.

5. A glass fiber for optical transmission as claimed in any preceding claim, wherein said fluorine-containing resin is selected from tetrafluoroethylene polymers, tetrafluorethylene-hexafluoropropylene copolymers, ethylene-tetrafluorethylene copolymers, perfluoroalkoxyethylene copolymers, chlorotrifluoroethylene polymers and vinylidene fluoride polymers.

6. A glass fiber for optical transmission as claimed in any preceding claim, wherein said first layer is a single layer of the material selected from silicone resins, epoxy resins, urethane resins, polyester, polybutadiene and modified resins thereof.

7. A glass fiber for optical transmission as claimed in claim 4, wherein said solid powder is selected from $SiO_2$, $TiO_2$, $CaCO_3$, $B_2O_3$, $ZrO_2$, $BaSO_4$ and a mixture thereof.

8. A glass fiber for optical transmission as claimed in Claim 5, wherein said fluorine-containing resin is an ethylene-tetrafluoroethylene copolymer or a perfluoroalkoxyethylene-tetrafluoroethylene copolymer.

9. A glass fiber for optical transmission as claimed in Claim 6, wherein said first layer is composed of a material selected from a silicone resin, an epoxy acrylate resin, a urethane acrylate resin and a butadiene acrylate resin.

**Patentansprüche**

1. Glasfaser zur optischen Übertragung, umfassend eine Glasfaser mit einer darauf vorgesehenen, ersten Überzugsschicht aus einem gehärteten Harz und einer zweiten, durch Strangpressen gebildeten, Fluor enthaltenden Harzschicht, wobei in beiden, der ersten und zweiten Schicht, ein Feststoffpulver, das in der Lage ist, Fluorgas oder Fluorwasserstoffsäure zu adsorbieren, vorhanden ist.

2. Glasfaser zur optischen Übertragung nach Anspruch 1, wobei das Feststoffpulver in einer Menge von 0,05 bis 20 Gew.-%, bezogen auf das Gewicht der ersten bzw. zweiten Schicht, vorhanden ist.

3. Glasfaser zur optischen Übertragung nach Anspruch 1 oder 2, wobei das Feststoffpulver einen Schmelz- oder Zersetzungspunkt von 350°C oder mehr besitzt.

4. Glasfaser zur optischen Übertragung nach mindestens einem der vorangehenden Ansprüche, wobei das Feststoffpulver gewählt wird aus Zinkoxid, Aluminiumoxid, Titanoxid, Magnesiumoxid, Calciumoxid, Siliciumoxid, Eisenoxid, Boroxid, Bariumsulfat, Zirkoniumoxid, Calciumcarbonat, Kohlenstoffpulver, Aktivkohlepulver und einer Mischung hiervon.

5. Glasfaser zur optischen Übertragung nach mindestens einem der vorangehenden Ansprüche, wobei das Fluor enthaltende Harz gewählt wird aus Tetrafluorethylenpolymeren, Tetrafluorethylen-Hexafluorpropylen-Copolymeren, Ethylen-Tetrafluorethylen-Copolymeren, Perfluoralkoxyethylen-Copolymeren, Chlortrifluorethylenpolymeren und Vinilydenfluoridpolymeren.

6. Glasfaser zur optischen Übertragung nach mindestens einem der vorangehenden Ansprüche, wobei die erste Schicht eine Einfachschicht aus einem Material, gewählt aus Silikonharzen, Epoxyharzen, Urethanharzen, Polyester, Polybutadien und modifizierten Harzen hiervon ist.

7. Glasfaser zur optischen Übertragung nach Anspruch 4, wobei das Feststoffpulver gewählt wird aus $SiO_2$, $TiO_2$, $CaCO_3$, $B_2O_3$, $ZrO_2$, $BaSO_4$ und einer Mischung hiervon.

8. Glasfaser zur optischen Übertragung nach Anspruch 5, wobei das Fluor enthaltende Harz ein Ethylen-Tetrafluorethylen-Copolymer oder ein Perfluoralkoxyethylen-Tetrafluorethylen-Copolymer ist.

9. Glasfaser zur optischen Übertragung nach Anspruch 6, wobei die erste Schicht aus einem Material, gewählt aus einem Silikonharz, Epoxyacrylatharz, Urethanacrylatharz und Butadienacrylatharz, zusammengesetzt ist.

**Revendications**

1. Fibre de verre destinée à des communications optiques, comprenant une fibre de verre sur laquelle est placée une première couche de revêtement d'une résine durcie et une seconde couche d'une résine contenant du fluor, formée par moulage par extrusion, telle qu'une poudre d'une matière solide capable d'adsorber du fluor gazeux ou de l'acide fluorhydrique est présente à la fois dans la première et dans la seconde couche.

2. Fibre de verre pour communications optiques selon la revendication 1, dans laquelle la poudre de matière solide est présente en quantités comprises entre 0,05 et 20% du poids de la première ou de la seconde couche respectivement.

3. Fibre de verre pour communications optiques selon l'une des revendications 1 et 2, dans laquelle la poudre d'une matière solide a une température de fusion ou une température de décomposition au moins égale à 350°C.

4. Fibre de verre pour communications optiques selon l'une quelconque des revendications précédentes, dans laquelle la poudre d'une matière solide est choisie parmi l'oxyde de zinc, l'oxyde d'aluminium, l'oxyde de titane, l'oxyde de magnésium, l'oxyde de calcium, l'oxyde de silicium, l'oxyde de fer, l'oxyde de bore, le sulfate de baryum, l'oxyde de zirconium, le carbonate de calcium, la poudre de carbone, la poudre de charbon actif, et un mélange en contenant.

5. Fibre de verre pour communications optiques selon l'une quelconque des revendications précédentes, caractérisée en ce que la résine contenant du fluor est choisie parmi les polymères de tétrafluoréthylène, les copolymères de tétrafluoréthylène et d'hexafluoropropylène, les copolymères d'éthylène et de tétafluoréthylène, les copolymères de perfluoroalkyléthylène, les polymères de chlorotrifluoréthylène et les polymères de fluorure de vinylidène.

6. Fibre de verre pour communications optiques selon l'une quelconque des revendications précédentes, dans laquelle la première couche est une couche unique d'une matière choisie parmi les résines de silicone, les résines époxydes, les résines d'uréthanne, les polyesters, les polybutadiènes et les résines modifiées leur correspondant.

7. Fibre de verre pour communications optiques selon la revendication 4, dans laquelle la poudre d'une matière solide est choisie parmi $SiO_2$, $TiO_2$, $CaCO_3$, $B_2O_3$, $ZrO_2$, $BaSO_4$ et un mélange en contenant.

8. Fibre de verre pour communications optiques selon la revendication 5, dans laquelle la résine contenant du fluor est un copolymère d'éthylène et de tétrafluoréthylène ou un copolymère de perfluoroalcoxyéthylène et de tétrafluoréthylène.

9. Fibre de verre pour communications optiques selon la revendication 6, dans laquelle la première couche est composée d'une matière choisie parmi une résine de silicone, une résine époxyde et d'acrylate, une résine d'uréthanne et d'acrylate et une résine de butadiène et d'acrylate.